# EUROPÄISCHE PATENTSCHRIFT

(11) **EP 2 400 170 B1**
(45) Veröffentlichungstag und Bekanntmachung des Hinweises auf die Patenterteilung: **09.03.2016**
(21) Anmeldenummer: 11162516.6
(22) Anmeldetag: 14.04.2011
(51) Int. Cl.: F16C 1/10

(54) **Betätigungseinrichtung**
Actuating device
Dispositif d'actionnement

(30) Priorität: 24.06.2010 DE 202010009499 U
(43) Veröffentlichungstag der Anmeldung: 28.12.2011
(73) Patentinhaber: Dura Automotive Systems GmbH, 40549 Düsseldorf (DE)
(72) Erfinder: von Borries, Rainer, 47647 Kerken (DE)
(74) Vertreter: Albrecht, Ralf

(56) Entgegenhaltungen:
- DE-A1- 10 058 241
- DE-A1- 10 059 783
- DE-A1-102005 033 817
- DE-C1- 19 816 278
- FR-A1- 2 729 209
- GB-A- 2 218 776
- US-A- 4 348 348

## Beschreibung

Die Erfindung betrifft eine Betätigungseinrichtung zur Fernbedienung eines zu betätigenden Organs mittels eines Betätigungsorgans, wobei die Betätigungseinrichtung einen biegsamen Betätigungsmantel und eine darin verschieblich geführte, biegsame Betätigungsseele aufweist und der Betätigungsmantel an wenigstens einer Stelle von einem Dämpfungselement aus einem gummielastischen Material umgeben ist, das eine auf dem Betätigungsmantel sitzende Nabe aufweist, von der sich radial wenigstens eine Dämpfungsscheibe erstreckt.

Insbesondere in Kraftfahrzeugen werden eine Reihe von Betätigungsfunktionen mit Hilfe von Betätigungseinrichtungen, auch Betätigurigszüge oder Bowdenzüge genannt, durchgeführt, da sie einfach und robust sind, geringes Gewicht haben und im Regelfall problemlos verlegt werden können. Dabei besteht eine Betätigungseinrichtung im Grundsatz aus zwei Teilen, nämlich einem schlauchförmigen Betätigungsmantel aus biegsamem Material und einer darin geführten Betätigungsseele, die als Kraftübertragungselement dient und meist als litzenartiger Draht ausgebildet ist. An beiden Enden des Betätigungsmantels steht die Betätigungsseele vor und hat dort Anschlussstücke, mit denen das eine Ende an dem Betätigungsorgan und das andere Ende an einem zu betätigenden Organ befestigt werden kann. Betätigungsorgane können beispielsweise Gaspedale, Türgriffe oder Schalthebel sein, während die jeweils zugehörigen, zu betätigenden Organe dann ein Vergaser oder eine Einspritzpumpe, ein Schloss bzw. ein Getriebe sind. Betätigungseinrichtungen der vorgenannten Art sind Gegenstand einer Vielzahl von vorveröffentlichten Dokumenten, wobei hier lediglich beispielhaft auf DE 90 12 668 U1 und EP 0 763 666 A2 verwiesen wird.

Gerade in Kraftfahrzeugen sind Betätigungseinrichtungen häufig mit Vibrationen oder Stößen beaufschlagt. Soweit sie in der Nähe von Karosserieteilen oder anderen Wandungen verlegt sind, besteht die Gefahr, dass die Betätigungseinrichtungen daran anschlagen, so dass die Stöße und Vibrationen übertragen werden. Dies führt zu unerwünschten Geräuschen und kann auch einen Verschleiß des Betätigungsmantels zur Folge haben. Um dies zu vermeiden, ist es bekannt, den Betätigungsmantel über seine gesamte Länge mit einem Schaumstoffmantel zu umgeben oder auf den Betätigungsmantel an einer oder mehreren Stellen ein muffenförmiges Dämpfungselement aus einem gummielastischen Material aufzuschieben, das einen sternförmigen Querschnitt hat.

In der DE 100 59 783 A1 ist eine gattungsgemäße Betätigungseinrichtung offenbart, bei der der Betätigungsmantel an einer Stelle von einem Dämpfungselement aus einem gummielastischen Material umgeben ist, das eine auf dem Betätigungsmantel sitzende Nabe aufweist, von der sich radial eine Dämpfungsscheibe erstreckt. Weitere Ausführungen von Dämpfungselementen für Betätigungseinrichtungen sind der US 4, 348, 348 A, DE 198 16 278 C1, FR 2 729 209 A1, DE 100 58 241 A1 und DE 10 2005 033 817 A1 zu entnehmen. Ferner ist in der GB 2 218 776 A eine Betätigungseinrichtung offenbart, für die eine Dämpfungsscheibe vorgesehen ist, die gemäß Figur 9 umfangsmäßig geschlossene Durchgangslöcher zur Beeinflussung der Resonanzfrequenzen aufweist (vgl. Figur 9).

Die Dämpfungseigenschaften der bisher bekannten Dämpfungselemente sind nicht optimal, so dass es gleichwohl zu Geräuschentwicklungen bei der Beaufschlagung des Betätigungszuges mit Vibrationen oder Stößen kommt. Dies hängt nicht zuletzt damit zusammen, dass sich die Dämpfungseigenschaften nur wenig variieren und damit an die jeweiligen Verhältnisse anpassen lassen.

Der Erfindung liegt demnach die Aufgabe zugrunde, das Dämpfungselement für eine Betätigungseinrichtung der eingangs genannten Art so zu gestalten, dass bessere Dämpfungseigenschaften erzielbar sind.

Diese Aufgabe wird erfindungsgemäß dadurch gelöst, dass die Dämpfungsscheibe zumindest ein axiales Durchgangsloch auf, von dem ein zum Außenumfang der Dämpfungsscheibe gehender Einführschlitz ausgeht. Ausgangspunkt der Erfindung ist es, ein im Wesentlichen scheibenförmiges Dämpfungselement vorzusehen, das sich von dem Betätigungsmantel radial erstreckt. Dabei ist der Begriff "Scheibe" nach allgemeinem Verständnis zu interpretieren, d.h. es handelt sich um ein Element, dessen Erstreckung in radialer Richtung ein Vielfaches der Erstreckung in axialer Richtung des Betätigungszuges ist. Mit Hilfe eines solchen Dämpfungselements können Vibrationen und Stöße wirksam gedämpft werden. Die Formgebung zeichnet sich durch eine hohe Variabilität und damit Anpassungsfähigkeit hinsichtlich der Dämpfungseigenschaften aus. Durch Wahl der Dicke und der radialen Erstreckung der Dämpfungsscheibe sowie durch die Wahl des Materials hierfür - als gummielastisches Material kommen insbesondere thermoplastische Elastomere in Frage - kann die Dämpfungseigenschaft in weiten Grenzen optimal an die jeweiligen Gegebenheiten angepasst werden. Selbst grobe Stöße können über die Dämpfungsscheibe weich aufgefangen werden und führen deshalb bei angrenzenden Wandungen nicht zu Geräuschentwicklung und -übertragung.

Über den erfindungsgemäßen Einführschlitz kann in der Dämpfungsscheibe in dem Durchgangsloch beispielsweise eine weitere Betätigungseinrichtung oder ein Kabel eingesetzt werden, so dass die Dämpfungsscheibe gleichzeitig als Führungselement für diese Betätigungseinrichtung bzw. dieses Kabel dient. Das so ausgebildete Dämpfungselement kann also eine Doppelfunktion erfüllen. Von Vorteil ist dabei, dass das in dem Durchgangsloch geführte Element ebenfalls von der Dämpfungsscheibe im Wesentlichen umgeben und damit vor Berührung mit angrenzenden Wänden geschützt ist.

In Ausbildung der Erfindung ist vorgesehen, dass auf dem Betätigungsmantel mehrere solcher Dämpfungselemente sitzen. Auch hier kann die Anzahl der Dämpfungselemente wie auch deren Abstand an die jeweiligen Gegebenheiten flexibel angepasst werden.

Die Dämpfungsscheibe muss nicht über den gesamten Umfang der Nabe gehen, beispielsweise wenn die Gefahr des Anschlagens an einer Wandung nur in einer Richtung besteht und Sorge dafür getragen ist, dass sich das Dämpfungselement nicht um die Achse des Betätigungsmantels drehen kann. Letzteres ist nicht erforderlich, wenn die Dämpfungsscheibe über den gesamten Umfang der Nabe geht, zumindest jedoch über den wesentlichen Umfang der Nabe. Dabei sollte die Dämpfungsscheibe eine zur axialen Mitte der Nabe koaxialen Symmetrieachse haben. Besonders vorteilhaft ist es, wenn die Dämpfungsscheibe einen kreisrunden oder mehreckigen, beispielsweise fünf- bis achteckigen Umfang hat.

Zweckmäßig für die Dämpfungseigenschaften des Dämpfungselementes ist es, wenn die Dämpfungsscheibe eine zum Außenumfang abnehmende Dicke hat, vorzugsweise an der Nabe eine Dicke von maximal 2 mm und am Umfang von maximal 1,5 mm aufweist. In der Ebene der Dämpfungsscheibe sollte die Dickenveränderung symmetrisch sein, so dass die Dämpfungsscheibe einen spitzwinkligen Querschnitt erhält.

Die Dämpfungsscheibe hat zweckmäßigerweise einen mittleren Durchmesser, der mindestens das fünfzehnfache der größten Dicke der Dämpfungsscheibe beträgt, vorzugsweise einen Durchmesser von 30 bis 50 mm hat, wobei sich ein Durchmesser von 40 mm als zweckmäßig erwiesen hat.

Das zumindest eine Durchgangsloch in der Dämpfungsscheibe kann beliebigen Querschnitt haben. Da Kabel oder Betätigungseinrichtungen in der Regel kreisrunden Querschnitt haben, bietet es sich an, dem Durchgangsloch ebenfalls einen kreisrunden Querschnitt zu geben. Um mehrere Möglichkeiten für die Aufnahme von Betätigungseinrichtungen und/oder Kabeln zu haben, sollte die Dämpfungsscheibe mehrere Durchgangslöcher aufweisen, vorzugsweise 3 bis 6 Durchgangslöcher. Dabei empfiehlt es sich, die Mitten der Durchgangslöcher auf einem zur Mittelachse der Nabe koaxialen Kreis anzuordnen, um gleiche Abstände zur Mittelachse der Nabe zu erhalten. Vorzugsweise sollten die Durchgangslöcher in Umfangsrichtung mit gleichem Winkelabstand angeordnet sein. Die Anordnung mehrerer Durchgangslöcher hat zudem den Vorteil, dass es bei Aufreihung mehrerer Dämpfungselemente hintereinander einfacher ist, die Durchgangslöcher in fluchtende Ausrichtung zu bringen.

Empfehlenswert ist es, wenn der bzw. die Einführschlitz(e) radial nach außen gerichtet ist bzw. sind. Besonders vorteilhaft ist es, wenn jeder Einführschlitz eine Breite hat, die zumindest im Bereich des jeweils zugehörigen Durchgangslochs so gering ist, dass dieses Durchgangsloch in Bezug auf den Einführschlitz eine Querschnittserweiterung darstellt. Eine solche Ausbildung verhindert ein Herausrutschen des in dem Durchgangsloch sitzenden Elementes, wenn dessen Durchmesser an den des Durchgangslochs angepasst ist, also größer ist als die Breite des Einführschlitzes. Das Einfuhren dieses Elementes ist gleichwohl möglich, weil sich der Einführschlitz beim Einführen des Elementes aufgrund der Elastizität des Materials der Dämpfungsscheibe selbsttätig erweitert und dann wieder auf die ursprüngliche Breite verengt. Das zumindest eine Durchgangsloch sollte einen mittleren Durchmesser von 4 bis 8 mm haben, während der bzw. die Einführschlitz(e) eine Breite von 1 bis 3 mm hat bzw. haben. Vorzugsweise sollte der mittlere Durchmesser des jeweiligen Durchgangslochs um wenigstens 2 mm, vorzugsweise um 4 mm größer sein als die Breite des zugehörigen Einführschlitzes.

Die axiale Erstreckung der Nabe kann den jeweiligen Anforderungen angepasst werden. Sie sollte mindestens das fünffache der größten Dicke der Dämpfungsscheibe haben, vorzugsweise eine axiale Erstreckung von 12 bis 18 mm. Die radiale Dicke der Nabe beträgt zweckmäßigerweise 1,5 mm bis 3 mm. Innenseitig kann die Nabe vorstehende Ringrippen aufweisen, die zweckmäßigerweise symmetrisch zur Dämpfungsscheibe angeordnet sind und/oder gerundet sind.

In weiterer Ausgestaltung der Erfindung ist vorgesehen, dass die Nabe und die Betätigungsscheibe den Betätigungsmantel nicht vollständig umgibt, zumindest jedoch um mehr als 180°, vorzugsweise um mehr als 340°. Dies eröffnet die Möglichkeit, das Dämpfungselement in radialer Richtung auf den Betätigungsmantel aufzuklippen, d.h. das Betätigungselement kann auch nachträglich, also nach der Montage der Betätigungseinrichtung, auf dem Betätigungsmantel fixiert werden. Dies schließt selbstverständlich nicht aus, dass die Nabe als geschlossene Hülse ausgebildet ist, die von einem Ende des Betätigungsmantels auf diesen aufgeschoben ist.

Statt nur einer Dämpfungsscheibe können an die Nabe auch mehrere Dämpfungsscheiben axial hintereinander angeformt sein. Dies ist eine Alternative zur Anordnung mehrere Dämpfungselemente der erfindungsgemäßen Art hintereinander.

Das Dämpfungselement ist zweckmäßigerweise einstückig ausgebildet, so dass es aus dem gleichen Material geformt werden kann. Hierfür kommt insbesondere ein thermoplastisches Elastomer, beispielsweise EPDM, in Frage. Vorzugsweise sollte das Material eine Shore-A-Härte von 30 bis 40 haben.

In der Zeichnung ist die Erfindung anhand eines Ausführungsbeispiels näher veranschaulicht. Es zeigen:
- Figur 1: eine perspektivische Darstellung des erfindungsgemäßen Dämpfungselementes für eine Betätigungseinrichtung;
- Figur 2: eine Frontalansicht des Dämpfungselementes gemäß Figur 1, und
- Figur 3: einen Axialschnitt durch das Dämpfungselement gemäß den Figuren 1 und 2 in der Ebene A-A in Figur 2.

Das in den Figuren dargestellte Dämpfungselement 1 besteht aus einer hülsenförmigen Nabe 2 und einer daran mittig angeformten Dämpfungsscheibe 3. Das Dämpfungselement 1 ist als einstückiges Teil ausgebildet und besteht aus einem thermoplastischen Elastomer mit einer Shore-A-Härte von 35.

Die Nabe 2 hat ebenso wie die Dämpfungsscheibe 3 einen kreisförmigen Außenumfang. Innen durchsetzt die Nabe 2 ein ebenfalls im Querschnitt kreisförmiger Durchgangskanal 4. Dieser ist für die Aufnahme eines Betätigungsmantels eines Betätigungszuges bestimmt. Hierzu wird das Dämpfungselement 1 auf eines der Enden des Betätigungsmantels aufgeschoben und soweit längs des Betätigungsmantels verschoben, bis die vorgesehene Stelle erreicht ist.

Die Nabe 2 hat einen Außendurchmesser von 9 mm und einen Innendurchmesser von 5 mm sowie eine axiale Länge von 15 mm. Von der Innenseite stehen zwei Ringrippen 5, 6 vor, die über den gesamten Innenumfang der Nabe 2 gehen und gerundet sind. Ihr Durchmesser beträgt 4,6 mm. Der Mittenabstand der Ringrippen 5, 6 beträgt 7,5 mm. Die Ringrippen 5, 6 sind im gleichen Abstand zur Ebene der Dämpfungsscheibe 3 angeordnet und sorgen für eine lokale Vergrößerung der Flächenpressung auf den Betätigungsmantel und damit für guten Halt in dessen axialer Richtung.

Die Dämpfungsscheibe 3 hat an ihrem Fuß eine Dicke von 2 mm und an der Außenseite eine Dicke von nur 1 mm. Sie läuft also vom Fußbereich bis zum Außenumfang konisch, d.h. spitzwinklig zu und ist am Außenumfang abgerundet. In Bezug auf ihre Ebene ist die Dämpfungsscheibe symmetrisch ausgebildet. Der Durchmesser am Außenumfang beträgt 40 mm.

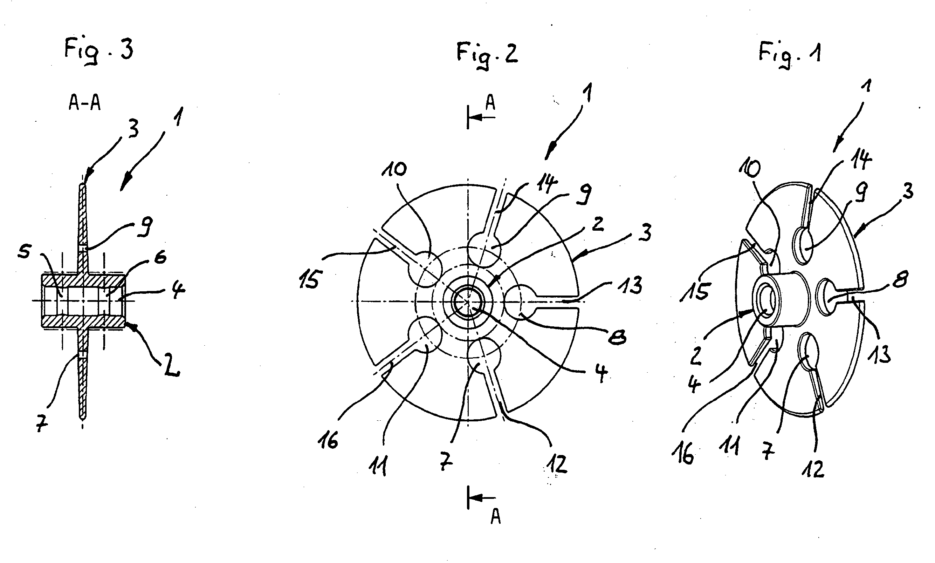

Wie insbesondere aus den Figuren 1 und 2 ersichtlich ist, weist die Dämpfungsscheibe 3 fünf kreisrunde Durchgangslöcher 7 bis 11 auf, deren Mitten gleichen Abstand zur Achse der Nabe 2 haben, also auf einem Kreis koaxial zur Achse der Nabe 2 liegen. Sie haben einen gleichen Winkelabstand von 72°. Der Durchmesser der Durchgangslöcher 7 bis 11 beträgt 6 mm.

Von den Durchgangslöchern 7 bis 11 geht jeweils ein Einführschlitz 12 bis 16 aus. Sie erstrecken sich jeweils radial zur Achse der Nabe 2, wobei ihre Mittenachsen die Mitten der jeweils zugehörigen Durchgangslöcher 7 bis 11 schneiden. Die Breite der Einführschlitze 12 bis 16 ist konstant und geringer als der Durchmesser der Durchgangslöcher 7 bis 11. Die Breite beträgt 2 mm.

In die Durchgangslöcher 7 bis 11 können elektrische Kabel oder auch weitere Betätigungseinrichtungen eingesetzt werden. Deren Durchmesser sollte nur geringfügig kleiner sein als der Durchmesser der Durchgangslöcher 7 bis 11, auf jeden Fall größer als die Breite der Einführschlitze 12 bis 16. Auf diese Wiese können sie aus den Durchgangslöchern 7 bis 11 nicht einfach herausrutschen. Das Einführen ist gleichwohl problemlos, da das Material der Dämpfungsscheibe 3 unter Verbreiterung des jeweiligen Einführschlitzes 12 bis 16 elastisch ausweichen kann.

## Patentansprüche

1. Betätigungseinrichtung zur Fernbedienung eines zu betätigenden Organs mittels eines Betätigungsorgans, wobei die Betätigungseinrichtung einen biegsamen Betätigungsmantel und eine darin verschieblich geführte, biegsame Betätigungsseele aufweist, und der Betätigungsmantel an wenigstens einer Stelle von einem Dämpfungselement (1) aus einem gummielastischen Material umgeben ist, das eine auf dem Betätigungsmantel sitzende Nabe (2) aufweist, von der sich radial wenigstens eine Dämpfungsscheibe (3) erstreckt **dadurch gekennzeichnet, dass** die Dämpfungsscheibe (3) ein oder mehrere, insbesondere 3 bis 6, axiale, vorzugsweise kreisrunde Durchgangslöcher (7 bis 11) aufweist, von dem bzw. denen jeweils ein zum Außenumfang der Dämpfungsscheibe (3) gehender Einführschlitz (12 bis 16) ausgeht.

2. Betätigungseinrichtung nach Anspruch 1, **dadurch gekennzeichnet, dass** auf dem Betätigungsmantel mehrere solcher Dämpfungselemente (1) sitzen.

3. Betätigungseinrichtung nach Anspruch 1 oder 2, **dadurch gekennzeichnet, dass** die Dämpfungsscheibe (3) über den gesamten Umfang der Nabe (2) geht, insbesondere eine zur axialen Mitte der Nabe koaxiale Symmetrieachse hat.

4. Betätigungseinrichtung nach einem der Ansprüche 1 bis 3, **dadurch gekennzeichnet, dass** die Dämpfungsscheibe (3) einen kreisrunden oder mehreckigen Umfang hat.

5. Betätigungseinrichtung nach einem der Ansprüche 1 bis 4, **dadurch gekennzeichnet, dass** die Dämpfungsscheibe (3) einen zum Außenumfang abnehmende Dicke hat, vorzugsweise an der Nabe (2) eine Dicke von maximal 2 mm und am Umfang von maximal 1,5 mm Dicke aufweist.

6. Betätigungseinrichtung nach einem der Ansprüche 1 bis 5, **dadurch gekennzeichnet, dass** die Dämpfungsscheibe (3) einen (mittleren) Durchmesser hat, der mindestens das 15-fache der größten Dicke der Dämpfungsscheibe (3) beträgt, vorzugsweise einen Durchmesser von 30 bis 50 mm hat.

7. Betätigungseinrichtung nach einem der Ansprüche 1 bis 6, **dadurch gekennzeichnet, dass** die Mitten der Durchgangslöcher (7 bis 11) auf zweckmäßigerweise einem zur Mittelachse der Nabe (2) koaxialen Kreis angeordnet sind und/oder die Durchgangslöcher (7 bis 11) in Umfangsrichtung mit gleichem Winkelabstand angeordnet sind.

8. Betätigungseinrichtung nach einem der Ansprüche 1 bis 7, **dadurch gekennzeichnet, dass** der bzw. die Einführschlitz (e) (12 bis 16) radial nach außen gerichtet ist bzw. sind und/oder jeder Einführschlitz (12 bis 16) eine Breite hat, die zumindest im Bereich des jeweils zugehörigen Durchgangslochs (7 bis 11) so gering ist, dass dieses Durchgangsloch (7 bis 11) dazu eine Querschnittserweiterung darstellt, vorzugsweise eine Breite von 1 bis 3 mm hat bzw. haben und/oder das zumindest eine Durchgangsloch (7 bis 11) einen (mittleren) Durchmesser von 4 bis 8 mm hat.

9. Betätigungseinrichtung nach einem der Ansprüche 7 und 8, **dadurch gekennzeichnet, dass** der mittlere Durchmesser des jeweiligen Durchgangslochs (7 bis 11) um wenigstens 2 mm, vorzugsweise um 4 mm größer ist als die Breite des zugehörigen Einführschlitzes (12 bis 16).

10. Betätigungseinrichtung nach einem der Ansprüche 1 bis 9, **dadurch gekennzeichnet, dass** die Nabe (2) eine axiale Erstreckung hat, die mindestens das Fünffache der größten Dicke der Dämpfungsscheibe (3), vorzugsweise eine axiale Erstreckung von 12 bis 18 mm hat und/oder eine radiale Dicke von 1,5 bis 3 mm hat.

11. Betätigungseinrichtung nach einem der Ansprüche 1 bis 10, **dadurch gekennzeichnet, dass** die Nabe (2) innenseitig vorstehende Ringrippen (5, 6) aufweist, die vorzugsweise symmetrisch zur Dämpfungsscheibe (3) angeordnet sind und/oder gerundet sind.

12. Betätigungseinrichtung nach einem der Ansprüche 1 bis 11, **dadurch gekennzeichnet, dass** die Nabe (2) und die Betätigungsscheibe (3) den Betätigungsmantel nicht vollständig umgeben, zumindest jedoch um mehr als 180°.

13. Betätigungseinrichtung nach einem der Ansprüche 1 bis 12, **dadurch gekennzeichnet, dass** an der Nabe (2) mehrere Dämpfungsscheiben (3) axial hintereinander angeformt sind.

14. Betätigungseinrichtung nach einem der Ansprüche 1 bis 13, **dadurch gekennzeichnet, dass** das Dämpfungselement (1) einstückig ausgebildet ist und/oder aus einem thermoplastischen Elastomer, beispielsweise EPDM, besteht, vorzugsweise mit einer Shore-A-Härte von 30 bis 40 hat.

## Claims

1. Actuating device for the remote actuation of a member to be actuated by means of an actuating member, wherein the actuating device comprises a flexible actuating jacket and a flexible actuating core displaceably guided therein and wherein the actuating jacket is surrounded by an attenuator element (1) made from a rubber-elastic material at least at one position, wherein the attenuator element comprises a hub (2) disposed on the actuating jacket, from which at least one attenuator disk (3) extends radially, **characterized in, that** the attenuator disk (3) comprises one or more, particularly 3 to 6 axial preferably circular through holes (7 to 11) from each of which extends an insertion slot (12 to 16) extending to the circumference of the attenuator disk (3).

2. Actuating device according to claim 1, **characterized in, that** a plurality of attenuator elements (1) is disposed on the actuating jacket.

3. Actuating device according to claim 1 or 2, **characterized in, that** the attenuator disk (3) extends over the entire circumference of the hub (2), particularly has a symmetry axis being coaxial with the axial center of the hub (2).

4. Actuating device according to one of claims 1 to 3, **characterized in, that** the attenuator disk (3) has a circular or polygonal circumference.

5. Actuating device according to one of claims 1 to 4, **characterized in, that** the attenuator disk (3) has a thickness decreasing towards the circumference, preferably a thickness of 2 mm at maximum at the hub (2) and a thickness of 1,5 mm at maximum at the circumference.

6. Actuating device according to one of claims 1 to 5, **characterized in, that** the attenuator disk (3) has an (average) diameter being at least 15 times the maximum thickness of the attenuator disk (3), preferably a diameter from 30 mm to 50 mm.

7. Actuating device according to one of claims 1 to 6, **characterized in, that** the centers of the through holes (7 to 11) usefully are positioned on a circle being coaxial with the center axis of the hub (2) and/or the through holes (7 to 11) are positioned at equal angular distance in the circumferential direction.

8. Actuating device according to one of claims 1 to 7, **characterized in, that** the insertion slot(s) (12 to 16) is/are directed radially outward and/or each insertion slot (12 to 16) has a width which at least in the region of the corresponding through hole (7 to 11) is so small that this through hole (7 to 11) provides a cross-sectional extension thereof, preferably has a width from 1 mm to 3 mm and/or the at least one through hole (7 to 11) has an (average) diameter from 4 mm to 8 mm.

9. Actuating device according to claims 7 and 8, **characterized in, that** the average diameter of the respective through hole (7 to 11) is at least 2 mm, preferably 4 mm, larger than the width of the corresponding insertion slot (12 to 16).

10. Actuating device according one of the claims 1 to 9, **characterized in, that** the hub (2) has an axial extension having at least the fivefold of the maximum thickness of the attenuator disk (3), preferably an axial extension of 12 to 18 mm and/or a radial thickness of 1,5 to 3 mm.

11. Actuating device according to one of the claims 1 to 10, **characterized in, that** the hub (2) has inwardly protruding annular ribs (5, 6), which are preferably positioned symmetrical to the attenuator disk (3) and/or are rounded.

12. Actuating device according to one of the claims 1 to 11, **characterized in, that** the hub (2) and the attenuator disk (3) surround the actuating jacket not completely, but at least more than 180°.

13. Actuating device according to one of the claims 1 to 12, **characterized in, that** several attenuator disks (3) are axially formed in a row at the hub (2).

14. Actuating device according to one of the claims 1 to 13, **characterized in, that** the attenuator element (1) is integrally formed and/or comprises a thermoplastic elastomer, for instance EPDM, preferably with a Shore-A-hardness of 30 to 40.

## Revendications

1. Dispositif d'actionnement destiné à télécommander un organe à actionner au moyen d'un organe d'actionnement, le dispositif d'actionnement présentant une gaine d'actionnement flexible et une âme d'actionnement flexible, guidée de manière coulissante dans celui-ci et la gaine d'actionnement étant entourée au niveau d'au moins une place d'un élément d'amortissement (1) composé d'un matériau en caoutchouc élastique, qui présente un moyeu (2) placé sur la gaine d'actionnement, depuis lequel au moins un disque d'amortissement (3) s'étend radialement, **caractérisé en ce que** le disque d'amortissement (3) présente un ou plusieurs, notamment 3 à 6, trous traversants (7 à 11) axiaux, de préférence circulaires dont part à chaque fois une fente d'insertion (12 à 16) allant vers la circonférence externe du disque d'amortissement (3).

2. Dispositif d'actionnement selon la revendication 1, **caractérisé en ce que** plusieurs éléments d'amortissement (1) de ce type sont placés sur la gaine d'actionnement.

3. Dispositif d'actionnement selon la revendication 1 ou 2, **caractérisé en ce que** le disque d'amortissement (3) va au-delà de la circonférence totale du moyeu (2), et présente notamment un axe de symétrie coaxial vers le centre axial du moyeu.

4. Dispositif d'actionnement selon l'une quelconque des revendications 1 à 3, **caractérisé en ce que** le disque d'amortissement (3) présente une circonférence circulaire ou polygonale.

5. Dispositif d'actionnement selon l'une quelconque des revendications 1 à 4, **caractérisé en ce que** le disque d'amortissement (3) présente une épaisseur décroissante vers la circonférence externe, de préférence une épaisseur de 2 mm maximum au niveau du moyeu (2) et une épaisseur de 1,5 mm maximum au niveau de la circonférence.

6. Dispositif d'actionnement selon l'une quelconque des revendications 1 à 5, **caractérisé en ce que** le disque d'amortissement (3) présente un diamètre (moyen) qui s'élève au moins à 15 fois l'épaisseur maximale du disque d'amortissement (3), de préférence un diamètre de 30 à 50 mm.

7. Dispositif d'actionnement selon l'une quelconque des revendications 1 à 6, **caractérisé en ce que** les centres des trous traversants (7 à 11) sont agencés de façon appropriée sur un cercle coaxial par rapport à l'axe central du moyeu (2) et/ou les trous traversants (7 à 11) sont agencés dans la direction de la circonférence avec une distance angulaire équivalente.

8. Dispositif d'actionnement selon l'une quelconque des revendications 1 à 7, **caractérisé en ce que** la ou les fente(s) d'insertion (12 à 16) est ou sont orientée(s)de façon radiale vers l'extérieur et/ou chaque fente d'insertion (12 à 16) présente une largeur qui est tellement faible, au moins dans la plage du trou traversant (7 à 11) à chaque fois concerné, que ce trou traversant (7 à 11) représente en plus un élargissement de la section transversale, **en ce qu'**elle/s a ou ont de préférence une largeur de 1 à 3 mm, et/ou le au moins un trou traversant (7 à 11) présente un diamètre (moyen) de 4 à 8 mm.

9. Dispositif d'actionnement selon l'une des revendications 7 et 8, **caractérisé en ce que** le diamètre moyen de respective trou traversant (7 à 11) est supérieur d'au moins 2 mm, de préférence de 4 mm à la largeur de la fente d'insertion concernée (12 à 16).

10. Dispositif d'actionnement selon l'une quelconque des revendications 1 à 9, **caractérisé en ce que** le moyeu (2) présente une extension axiale qui présente au moins cinq fois l'épaisseur la plus importante du disque d'amortissement (3), de préférence une extension axiale de 12 à 18 mm et/ou présente une épaisseur radiale de 1,5 à 3 mm.

11. Dispositif d'actionnement selon l'une quelconque des revendications 1 à 10, **caractérisé en ce que** le moyeu (2) présente, dans sa partie interne, des nervures circulaires saillantes (5,6), qui sont de préférence agencées de manière symétrique par rapport au disque d'amortissement (3) et/ou sont arrondies.

12. Dispositif d'actionnement selon l'une quelconque des revendications 1 à 11, **caractérisé en ce que** le moyeu (2) et le disque d'actionnement (3) n'entourent pas complètement la gaine d'actionnement, mais au moins de plus de 180 degrés.

13. Dispositif d'actionnement selon l'une quelconque des revendications 1 à 12, **caractérisé en ce que** plusieurs disques d'amortissement (3) sont formés les uns derrière les autres de manière axiale au niveau du moyeu (2).

14. Dispositif d'actionnement selon l'une quelconque des revendications 1 à 13, **caractérisé en ce que** l'élément d'amortissement (1) est formé d'une seule pièce et/ou se compose d'un élastomère thermoplastique, par exemple de l'EPDM, de préférence avec une dureté Shore A de 30 à 40.
